(19) Europäisches Patentamt
European Patent Office
Office européen des brevets

(11) **EP 4 491 762 A1**

(12) **EUROPEAN PATENT APPLICATION**
published in accordance with Art. 153(4) EPC

(43) Date of publication:
**15.01.2025 Bulletin 2025/03**

(21) Application number: 23766374.5

(22) Date of filing: **06.02.2023**

(51) International Patent Classification (IPC):
*C23C 26/00* (2006.01)   *B32B 15/08* (2006.01)
*B32B 27/30* (2006.01)   *C09D 5/00* (2006.01)
*C09D 5/02* (2006.01)   *C09D 7/61* (2018.01)
*C09D 133/00* (2006.01)

(52) Cooperative Patent Classification (CPC):
**B32B 15/08; B32B 27/30; C09D 5/00; C09D 5/02;
C09D 7/61; C09D 133/00; C23C 26/00**

(86) International application number:
**PCT/JP2023/003712**

(87) International publication number:
**WO 2023/171194 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 07.03.2022 JP 2022034255

(71) Applicant: **Nippon Paint Surf Chemicals Co., Ltd.
Shinagawa-ku
Tokyo 140-8675 (JP)**

(72) Inventors:
• **WADA, Yuko
Tokyo 140-8675 (JP)**
• **SASAKI, Shota
Tokyo 140-8675 (JP)**
• **UTSUNOMIYA, Akira
Tokyo 140-8675 (JP)**
• **OBORA, Ayako
Tokyo 140-8675 (JP)**

(74) Representative: **Herzog IP Patentanwalts GmbH
Steinstraße 16-18
40212 Düsseldorf (DE)**

(54) **SUBSTRATE TREATMENT AGENT AND METAL MATERIAL**

(57)     Provided is a substrate treatment agent capable of provide a metal material with preferable adhesiveness, acid resistance, and alkali resistance to a laminate film. For the substrate treatment agent, the concentration of a water-soluble metal compound is 500-200,000 mass ppm in terms of metal atoms, a water-soluble or water-dispersible acrylic resin has a number average molecular weight of 70,000-500,000, the solid content has an acid value of 150-740 mgKOH/g and a hydroxyl value of 40-350 mgKOH/g, the water-soluble or water-dispersible acrylic resin has a glass transition temperature in the range of 63-100°C, the concentration of the water-soluble or water-dispersible acrylic resin is 500-200,000 mass ppm in terms of solid content, and the ratio of the concentration of the water-soluble metal compound in terms of metal atoms to the concentration of the water-soluble or water-dispersible acrylic resin is 3/97-91/9. The substrate treatment agent is used in the manufacture of laminated metal materials.

EP 4 491 762 A1

**Description**

TECHNICAL FIELD

The present invention relates to a pretreatment agent and a metal material.

BACKGROUND ART

For protecting and designing a metal material such as aluminum and aluminum alloys, a technique of subjecting the surface of the metal material to laminate processing has been conventionally known. The laminating film attached to the surface of the metal material in the laminate processing has excellent processability, corrosion resistance, and barrier properties for the contents, and the like. In addition, the laminating film, which generates no volatile organic compounds in the manufacturing process unlike paints, is also advantageous in environmental aspects, and is widely used as a surface protective material in food cans, capacitor cases, battery members, and the like.

In the application of the laminate processing, the improvement of the adhesiveness between a laminating film and the metal material is important from the viewpoint of aesthetic appearance and maintenance of corrosion resistance. Thus, there has been known a technique of improving adhesiveness between the metal material and the laminating film by using a resin containing an oxazoline group and an acrylic resin as a pretreatment layer of the metal material (see Patent Document 1).

Citation List

Patent Document

Patent Document 1: Japanese Unexamined Patent Application, Publication No. 2011-187386

DISCLOSURE OF THE INVENTION

Problems to be Solved by the Invention

In the technique described in Patent Document 1, the pretreatment layer has an amide ester moiety formed by a reaction between the oxazoline group and a carboxyl group to improve the adhesiveness, but there is still room for improvement from the viewpoint of achieving preferable adhesiveness. In addition, the technique also has room for improvement in terms of production cost, since the use of a resin containing an oxazoline group is a prerequisite.

The present invention has been made in view of the above circumstances, and an object of the present invention is to provide a pretreatment agent capable of imparting, to a metal material, favorable adhesiveness to a laminating film, acid resistance, alkali resistance, and water resistance of a coating.

Means for Solving the Problems

In order to solve the above problems, the present invention provides the following aspects.

[1] A pretreatment agent comprises: a water-soluble metal compound being at least one of a water-soluble zirconium compound or a water-soluble titanium compound; and a water-soluble or water-dispersible acrylic resin, wherein

the concentration of the water-soluble metal compound is 500 to 200,000 ppm by mass in terms of metal atoms, the water-soluble or water-dispersible acrylic resin has a number average molecular weight of 70,000 to 500,000, a solid acid value of 150 to 740 mg KOH/g, a solid hydroxyl value of 40 to 350 mg KOH/g, and a glass transition temperature of 63 to 100°C,
the concentration of the water-soluble or water-dispersible acrylic resin is 500 to 200,000 ppm by mass in terms of solid content,
the ratio of the concentration of the water-soluble metal compound in terms of metal atoms to the concentration of the water-soluble or water-dispersible acrylic resin is 3/97 to 91/9, and
the pretreatment agent is used in the production of a laminated metal material.

[2] In the pretreatment agent according to [1] above, a dry coating formed by applying the pretreatment agent to an aluminum substrate and drying the pretreatment agent, and having a coating mass of 50 to 100 $mg/m^2$ has a surface free energy of 52 to 74 $mJ/m^2$.

[3] In the pretreatment agent according to [1] or [2] above, the water-soluble or water-dispersible acrylic resin is a copolymer of a monomer (A), and

the monomer (A) comprises one or more monomers having a glycidyl group, an amide group, a silanol group, a phosphate group, a nitrile group, or an imide group.

[4] In the pretreatment agent according to [3] above, the equivalent ratio (i)/(ii) of the sum of chemical equivalents of one or more functional groups selected from the group consisting of the glycidyl group, the amide group, the silanol group, the phosphate group, the nitrile group, and the imide group included in the water-soluble or water-dispersible acrylic resin (i) to chemical equivalents of the hydroxyl group included in the water-soluble or water-dispersible acrylic resin (ii) is in the range of 0.03 to 0.20.

[5] A metal material has at least one surface treated with the pretreatment agent according to any one of [1] to [4] above.

[6] In the metal material according to [5] above, the metal material comprises a coating formed thereon, and, on a dry mass basis of the coating for each of the at least one surface, the coating comprises 0.8 to 3200 mg/m$^2$ of the water-soluble metal compound in terms of metal atoms, and 1.0 to 4000 mg/m$^2$ of the water-soluble or water-dispersible acrylic resin in terms of solid content.

Effects of the Invention

The present invention can provide a pretreatment agent capable of imparting, to a metal material, favorable adhesiveness to a laminating film, acid resistance, alkali resistance, and water resistance of a coating.

PREFERRED MODE FOR CARRYING OUT THE INVENTION

Hereinafter, embodiments of the present invention will be described. The present invention is not limited to the following descriptions of the embodiments.

<Pretreatment Agent>

The pretreatment agent according to the present embodiment forms, on the surface of a metal material, a coating having improved adhesiveness to a laminating film. The metal material laminated with the coating and the laminating film (hereinafter, may be referred to as "laminated metal material") can be used for various applications, including, but not limited to: bodies or lid members of food cans; bodies or lid members of beverage cans; heat exchangers; outer packaging materials for batteries; battery separators; capacitor cases; bodies, engine parts or chassis parts of vehicles, bodies, main wings, frames, fuel tanks, engine turbines, engine fans or parts of aircrafts; bodies, trucks or parts of railway vehicles; ships; rocket members; bicycle parts; vending machines; car side plates, governors or traction machines of elevators; steps or interior panels of escalators; machine tools; injection molding machines; structural or driving members of industrial robots; semiconductor manufacturing equipment; displays; submarines; traffic signals; automated weaving machines; tunnel excavators; pipelines; road signs; generators; trash incinerators; exhaust gas treatment equipment; motors; transformers; electronic circuits; light bulbs; photomultiplier tubes; golf clubs; antennas; bolts; nuts; and screws. The pretreatment agent according to the present embodiment can also be used, in addition to the above, as a flexible packaging material for foods such as an aluminum pouch or a surface protective material, where the adhesiveness between a metal material and a laminating film in a hot and humid environment is required.

The pretreatment agent according to the present embodiment contains a water-soluble metal compound and a water-soluble or water-dispersible acrylic resin.

(Water-Soluble Metal Compound)

The water-soluble metal compound is at least one of a water-soluble zirconium compound or a water-soluble titanium compound. The water-soluble metal compound is contained in the pretreatment agent to form a coating containing at least one of the zirconium compound or the titanium compound on the surface of the metal material. Examples of the water-soluble zirconium compound include, but are not limited to, hexafluorozirconic acid ($H_2ZrF_6$), ammonium hexafluorozirconate (($NH_4)_2ZrF_6$), zirconium ammonium carbonate (($NH_4)_2ZrO(CO_3)_2$), tetraalkylammonium-modified zirconium, zirconium monoacetylacetate, zirconium tetraacetylacetate, etc. Examples of the water-soluble titanium compound include, but are not limited to, ammonium titanium fluoride salts, alkoxytitaniums, and ammonium titanium lactate salts. In addition to the above, in the specification, the water-soluble zirconium compound and the water-soluble titanium compound also include aqueous dispersions of the zirconium compound or titanium compound. Examples of the aqueous dispersions of the zirconium compound or titanium compound include zirconia sols, titania sols, and the like, which are composed of zirconia ($ZrO_2$) being the zirconium compound or titania ($TiO_2$) being the titanium compound as a dispersoid and water as a dispersion medium. The water-soluble metal compounds mentioned above may be used alone or in combination of two or more types thereof. In other words, in an embodiment of the water-soluble metal compound, a water-soluble zirconium compound and a water-soluble titanium compound may be used in combination. The water-soluble metal compound is more preferably a water-soluble zirconium compound.

The concentration of the water-soluble metal compound in the pretreatment agent is 500 to 200,000 ppm by mass in terms of metal atoms. When the concentration is less than 500 ppm, the adhesiveness and corrosion resistance of the laminated metal material are lowered. When the concentration is more than 200,000 ppm, the adhesiveness is lowered and the cost of the pretreatment agent increases. From the viewpoints mentioned above, the concentration of the water-soluble metal compound is preferably 500 to 60,000 ppm by mass, and more preferably 1,000 to 60,000 ppm by mass in terms of metal atoms.

(Water-Soluble or Water-Dispersible Acrylic Resin)

The water-soluble or water-dispersible acrylic resin is a copolymer of a monomer (A), and the monomer (A) is, for example, a polymerizable monomer such as a radically-polymerizable monomer. The water-soluble or water-dispersible acrylic resin can be obtained by known methods utilizing polymerization reactions using the monomer (A) as a raw material component. Examples of the radically-polymerizable monomer include, but are not limited to, hydroxy group-containing radically-polymerizable monomers such as hydroxyl group-containing radically-polymerizable monomers such as 2-hydroxyethyl (meth)acrylate, 2-hydroxypropyl (meth)acrylate, 3-hydroxybutyl (meth)acrylate, 4-hydroxybutyl (meth)acrylate, allyl alcohol, methacryl alcohol, and adducts of 2-hydroxyethyl (meth)acrylate and ε-caprolactone; (meth)acrylic acid and derivatives thereof such as methyl (meth)acrylate, ethyl (meth)acrylate, methoxypolyethylene methacrylate, acrylic acid, methacrylic acid, crotonic acid, isocrotonic acid, acrylic acid dimer, and ε-caprolactone adducts of acrylic acid; and carboxyl group-bearing radically-polymerizable monomers such as unsaturated dibasic acids, for example, maleic acid, fumaric acid, and itaconic acid as well as half-esters, half-amides, and half-thioesters thereof; and the like. The expression "(meth)acryl" as used herein means acryl and/or methacryl.

In addition to the above, examples of the monomer (A) that can be used in obtaining the water-soluble or water-dispersible acrylic resin include (meth)acrylates such as propyl (meth)acrylate, isopropyl (meth)acrylate, n-butyl (meth)acrylate, isobutyl (meth)acrylate, t-butyl (meth)acrylate, 2-ethylhexyl (meth)acrylate, lauryl (meth)acrylate, phenyl (meth)acrylate, isobornyl (meth)acrylate, cyclohexyl (meth)acrylate, t-butylcyclohexyl (meth)acrylate, dicyclopentadienyl (meth)acrylate, and dihydrodicyclopentadienyl (meth)acrylate; polymerizable aromatic compounds such as styrene, α-methylstyrene, vinyl ketones, t-butylstyrene, parachlorostyrene, and vinylnaphthalene; α-olefin such as ethylene and propylene; vinyl esters such as vinyl acetate and vinyl propionate; and dienes such as butadiene and isoprene; and the like.

The monomer (A) used in obtaining the water-soluble or water-dispersible acrylic resin may optionally include a monomer having a glycidyl group, an amide group (specific examples of the amide group include -CONR-, wherein R is a hydrogen atom or an alkyl group having 1 or more and 4 or less carbon atoms, and the alkyl group may be linear or branched), a silanol group, a phosphate group, a nitrile group or an imide group. The monomer having the functional group can be used as, for example, a modifier of the acrylic resin, and thus leads to an advantageous effect that the adhesiveness between a coating formed by the pretreatment agent and the metal material can be improved. The monomer having a glycidyl group, an amide group, a silanol group, a phosphate group, a nitrile group, or an imide group, which may be included in the monomer (A), may be used alone or in combination of two or more types thereof. The optional monomer (A) may preferably include a monomer containing at least any one of a glycidyl group, an amide group, or a nitrile group.

In the preparation of the acrylic resin, in the case where the monomer having a functional group selected from the group consisting of a glycidyl group, an amide group, a silanol group, a phosphate group, a nitrile group, and an imide group is included, the equivalent ratio (i)/(ii) of the sum of chemical equivalents of one or more functional groups selected from the group consisting of the glycidyl group, the amide group, the silanol group, the phosphate group, the nitrile group, and the imide group (i) included in the acrylic resin obtained in the preparation to chemical equivalents of the hydroxyl group included in the water-soluble or water-dispersible acrylic resin (ii) is preferably in the range of 0.03 to 0.20, and more preferably in the range of 0.04 to 0.15. The equivalent ratio (i)/(ii) within the range specified above leads to an advantageous effect that the balance between the adhesiveness and the properties of the pretreatment agent can be favorably maintained, etc.

Specific examples of the monomer that can be used as the modifier include: glycidyl group-containing monomers such as glycidyl (meth)acrylate and (meth)allyl glycidyl ether; amide group-containing monomers such as (meth)acrylamide, N-methylol(meth)acrylamide, N,N-dimethyl(meth)acrylamide, N,N-dibutyl(meth)acrylamide, N,N-dioctyl(meth)acrylamide, N-monobutyl(meth)acrylamide, N-monooctyl(meth)acrylamide, and hydroxyethylacrylamide; phosphate group-containing monomers such as acid phosphoxyethyl methacrylate and acid phosphoxypolyoxyethylene glycol monomethacrylate; silanol group-containing monomers such as vinylmethoxysilane, vinyltrimethoxysilane, vinylethoxysilane, vinyltriethoxysilane, 3-aminopropyltrimethoxysilane, 3-methacryloxypropyltriethoxysilane, and 3-methacryloxypropyltrimethoxysilane; nitrile group-containing monomers such as acrylonitrile, methacrylonitrile, and a monomer derived from methacrylonitrile by replacing the methyl group thereof with an alkyl group having 2 to 16 carbon atoms; imide group-containing monomers such as amide imides; and the like.

The monomer (A) used for preparing the acrylic resin includes at least two or more of the monomers mentioned above.

Examples of the polymerization initiator used for preparing the acrylic resin include, but are not limited to, 4,4'-azobis(4-cyanovaleric acid), 2,2'-azobis(2-methylpropionamidine) dihydrochloride, 2,2'-azobis-2-(2-imidazolin-2-yl)propane hydrochloride, ammonium peroxodisulfate, sodium peroxodisulfate, potassium peroxodisulfate, etc.

The polymerization method for obtaining the acrylic resin is not limited, and the acrylic resin can be synthesized using a known method such as a solution radical polymerization method, an emulsion polymerization method, or a suspension polymerization method. For example, the acrylic resin can be obtained by adding dropwise a mixture solution of a known radical polymerization initiator and the monomer to an appropriate solvent at a polymerization temperature of 60 to 160°C over 2 to 10 hours with stirring. In the preparation of the acrylic resin, neutralization may optionally be performed after the polymerization.

The acrylic resin has a number average molecular weight of 70,000 to 500,000. When the number average molecular weight is less than 70,000, favorable water resistance of the coating may not be achieved. When the number average molecular weight is more than 500,000, the viscosity of the resultant pretreatment agent increases, and the coating workability and storage stability may be deteriorated. From the viewpoints mentioned above, the acrylic resin has a number average molecular weight of preferably 70,000 to 200,000, and more preferably 80,000 to 200,000. The number average molecular weight is determined by a GPC method using polyethylene oxide as a standard.

The acrylic resin has a solid hydroxyl value of 40 to 350 mg KOH/g. When the solid hydroxyl value is less than 40 mg KOH/g, the adhesiveness and corrosion resistance of the laminated metal material are lowered. When the solid hydroxyl value is more than 350 mg KOH/g, the storage stability of the resultant acrylic resin may be lowered. The solid hydroxyl value is preferably in the range of 50 to 250 mg KOH/g, more preferably in the range of 55 to 210 mg KOH/g, and particularly preferably in the range of 60 to 150 mg KOH/g.

The "solid hydroxyl value" of the acrylic resin in the specification and claims means a theoretical value of the solid hydroxyl value obtained by determining the amount of a free hydroxyl group contained in 1 g of the solid content of the acrylic resin based on the ratio of the monomers used for polymerization of the acrylic resin and calculating the amount of potassium hydroxide (unit: mg) required to neutralize acetic acid necessary for acetylation of the free hydroxyl group. The solid hydroxyl value of the acrylic resin is adjusted to fall within the above-specified numerical range through the adjustment of the ratio of the monomers used for the polymerization.

The acrylic resin has a solid acid value of 150 to 740 mg KOH/g. When the solid acid value is less than 150 mg KOH/g, the water solubility is lowered, resulting in the deterioration of the appearance of the coating, and the adhesiveness of the laminated metal material is also lowered. When the solid acid value is more than 740 mg KOH/g, the necessary hydroxyl value described above cannot be achieved. The solid acid value is preferably in the range of 200 to 700 mg KOH/g, and more preferably in the range of 400 to 680 mg KOH/g.

The "solid acid value" of the acrylic resin in the specification and claims means a theoretical value of the solid acid value obtained by calculating the amount of potassium hydroxide (unit: mg) required to neutralize an acid group contained in 1 g of the solid content of the acrylic resin based on the ratio of the monomers used for polymerization of the acrylic resin. The solid acid value of the acrylic resin is adjusted to fall within the above-specified numerical range through the adjustment of the ratio of the monomers used for the polymerization.

The acrylic resin has a glass transition temperature in the range of 63 to 100°C. When the glass transition temperature is less than 63°C, the adhesiveness after the heat treatment of the laminated metal material may be deteriorated. On the other hand, when the glass transition temperature is higher than 100°C, the production stability of the acrylic resin may be deteriorated, and the processing stability of the coating formed from the pretreatment agent may be deteriorated. The glass transition temperature is preferably in the range of 65 to 95°C, and more preferably in the range of 70 to 90°C.

The glass transition temperature (Tg) of the acrylic resin in the specification and claims can be calculated as the reciprocal of the sum of the respective quotients obtained by dividing the mass fraction of each monomer constituting the acrylic resin by the Tg (K: Kelvin) value of a homopolymer derived from each monomer. More specifically, in the present disclosure, the glass transition temperature (Tg) can be calculated according to Fox's equation (T. G. Fox; Bull. Am. Phys. Soc., 1 (3), 123 (1956)). For example, when a resin is a polymer of a plurality of monomers, a Tg expressed by the following general equation is referred to as the Tg of the resin:

$$1/Tg = wa/Tga + wb/Tgb + \ldots + wn/Tgn$$

wherein,

Tga means the glass transition temperature (K) of a homopolymer of monomer A, and wa means the mass fraction of the monomer A,
Tgb means the glass transition temperature (K) of a homopolymer of monomer B, and wb means the mass fraction of the monomer B,

Tgn means the glass transition temperature (K) of a homopolymer of monomer N, and wn means the mass fraction of the monomer N, and

$$wa + wb + \ldots + wn = 1.$$

The glass transition temperature of the acrylic resin is adjusted to fall within the above-specified numerical range through the adjustment of the types and ratio of the monomers used for the polymerization.

The concentration of the acrylic resin in the pretreatment agent is 500 to 200,000 ppm by mass in terms of solid content. When the concentration is less than 500 ppm by mass, the adhesiveness and corrosion resistance of the laminated metal material may be deteriorated, and the acid resistance and alkali resistance may be deteriorated. When the concentration is more than 200,000 ppm by mass, the viscosity of the resultant pretreatment agent increases, leading to difficulty in handling. In addition, the performance improvement is not commensurate with the increase in the amount of the acrylic resin, while the cost increases. The lower limit of the concentration of the acrylic resin in the pretreatment agent may be 1000 ppm by mass, 1400 ppm by mass, or 1500 ppm by mass. The upper limit of the concentration may be 100,000 ppm by mass, 80,000 ppm by mass, or 70,000 ppm by mass.

The ratio of the mass concentration of the water-soluble metal compound in terms of metal atoms to the mass concentration of the acrylic resin in terms of solid content is 3/97 to 91/9 in terms of water-soluble metal compound concentration/acrylic resin concentration. When the proportion of the water-soluble metal compound in the concentration ratio is higher than 91/9, the adhesiveness of the coating formed from the pretreatment agent to the metal material such as an aluminum material and to the laminating film is lowered. When the proportion of the water-soluble metal compound in the concentration ratio is lower than 3/97, the adhesiveness to a metal material such as an aluminum material is lowered. The ratio is preferably 10/90 to 85/15, and more preferably 15/85 to 80/20.

(Other Components)

The pretreatment agent according to the present embodiment may optionally contain other resins in addition to the water-soluble metal compound and the acrylic resin. For example, a polyester resin, an alkyd resin, an epoxy resin, a urethane resin, or the like may be contained. These resins can be used alone or in combination of two or more types thereof. In the pretreatment agent according to the present embodiment, the acrylic resin accounts for preferably 70 to 100 mass %, and more preferably 90 to 100 mass %, based on the total mass of the resin solid content.

The pretreatment agent according to the present embodiment may not contain a crosslinking agent. The pretreatment agent according to the present embodiment achieves preferable adhesiveness and corrosion resistance of the laminated metal material even without any crosslinking agent. The pretreatment agent according to the present embodiment preferably contains substantially no resin containing an oxazoline group. This leads to a reduction of the manufacturing cost of the pretreatment agent. It should be noted that the phrase "contains substantially no resin containing an oxazoline group" means that the proportion of the solid content of the resin containing an oxazoline group to the total amount of the solid content of the acrylic resin and the solid content of the resin containing an oxazoline group in the pretreatment agent is less than 2% by mass. The proportion of the resin containing an oxazoline group may be less than 1% by mass or less than 0.1% by mass. Alternatively, the resin containing an oxazoline group may not be contained in the pretreatment agent at all. However, the pretreatment agent according to the present embodiment may contain a crosslinking agent. Examples of the crosslinking agent include, but are not limited to, water-dispersible thermosetting crosslinking agents such as water-soluble melamine resins and water-soluble phenol resins.

In addition to the above, the pretreatment agent according to the present embodiment may optionally contain known additives such as a stabilizer, an antioxidant, a surface modifier, an antifoaming agent, and an antibacterial agent.

Examples of the antioxidant include phenolic antioxidants, phosphorus-based antioxidants, sulfur-based antioxidants, etc.

Examples of the surface modifier include nonionic or cationic surfactants, adducts of polyacetylene glycol and polyethylene oxide or polypropylene oxide, acetylene glycol compounds, etc.

Examples of the antifoaming agent include mineral oilbased antifoaming agents, fatty acid-based antifoaming agents, silicone antifoaming agents, etc.

Examples of the antibacterial agent include zinc pyrithione, 2-(4-thiazolyl)-benzimidazole, 1,2-benzisothiazoline, 2-n-octyl-4-isothiazoline-3-one, N-(fluorodichloromethylthio)phthalimide, N,N-dimethyl-N'-phenyl-N'-(fluorodichloromethylthio)-sulfamide, methyl 2-benzimidazolecarbamate, bis(dimethylthiocarbamoyl)disulfide, N-(trichloromethylthio)-4-cyclohexane-1,2-dicarboximide, barium metaborate, allyl isothiocyanate; quaternary ammonium salts such as polyoxyalkylene trialkylammonium, organic silicone quaternary ammonium salts, and hexamethylene biguanide hydrochloride; quaternary phosphonium salts such as tri-n-butyltetradecylphosphonium chloride; polyphenolic antibacterial agents, phenylamide antibacterial agents, biguanide antibacterial agents, etc.

<Method for Producing Pretreatment Agent>

The method for producing the pretreatment agent according to the present embodiment is not limited, and the pretreatment agent can be produced by a known method, such as mixing the water-soluble metal compound, the water-soluble or water-dispersible acrylic resin, and other optional components in water as a solvent and stirring the mixture.

For example, when the water-soluble metal compound is a basic metal compound such as zirconium ammonium carbonate, it is more preferable to adjust the pH of the pretreatment agent to 7 to 10 from the viewpoint of the stability of the pretreatment agent. In the pretreatment agent of the present embodiment, the use of a basic metal compound as the water-soluble metal compound is more preferable, since it leads to an advantageous effect that the bonding between the resins can be further strengthened by the crosslinking via a metal, and the like.

The pretreatment agent according to the present embodiment is prepared in the form of an aqueous solution or an aqueous dispersion of the water-soluble metal compound and the water-soluble or water-dispersible acrylic resin. This eliminates the need for the pretreatment agent to contain an organic solvent, and thus the pretreatment agent according to the present embodiment is also advantageous in environmental aspects and workability.

<Laminated Metal Material>

The pretreatment agent according to the present embodiment is used in the production of a laminated metal material that is produced by forming a coating on at least one surface of a metal material and attaching a laminating film thereto. The method for producing the laminated metal material is not limited. An exemplary method involves subjecting a metal material such as a thin plate material to a degreasing treatment, followed by optional washing with water, washing with an acid, surface modification, and the like, then applying the pretreatment agent according to the present embodiment to the metal material, heating and drying the pretreatment agent to form a coating on the surface of the metal material, and further attaching a laminating film made of a thermoplastic resin or the like thereto.

Examples of the metal material to be treated with the pretreatment agent according to the present embodiment include aluminum or an aluminum alloy, iron, an iron alloy, copper, a copper alloy, SUS, etc. Among them, aluminum or an aluminum alloy is preferably used as the metal material from the viewpoint of workability and adhesiveness. For example, aluminum alloy 3004 materials, 3104 materials, aluminum alloy 3005 materials, etc. are preferably used for beverage/food can bodies, aluminum alloy 5052 materials, aluminum alloy 5182 materials, etc. are preferably used for lid members of beverage/food cans, aluminum alloy 1050 materials, aluminum alloy 1100 materials, and 1200 materials are preferably used for dry battery housings, 8079 materials are preferably used for aluminum alloys for battery packaging materials, and 8021 materials are preferably used for electrode materials, and the like. Al-Cu alloys, Al-Mn alloys, Al-Si alloys, Al-Mg alloys, Al-Mg-Si alloys, Al-Zn-Mg alloys, or aluminum die castings (ADC materials) may be used as the aluminum alloy. In addition to the above, brass or the like, for example, is used as the copper alloy being the metal material, and examples of the SUS include austenitic stainless steels such as SUS 304 and SUS 301, ferritic stainless steels such as SUS 430, martensitic stainless steels such as SUS 410, and the like. Examples of the nickel alloy include Ni-P alloys, etc. In addition to the above, a plated metal material such as a Ni-plated steel sheet, a Zn-plated steel sheet, or a Zn-Ni-plated steel sheet may be used as the metal material. Examples of the plated steel sheet include Ni-plated steel sheets, Zn-plated steel sheets, Zn-Ni-plated steel sheets, etc. based on SPCC, SPCD, SPCE or the like as a base steel sheet.

The shape of the metal is not limited, and examples thereof include a foil-like shape and a plate-like shape. When a metal having a shape like a foil or plate is surface-treated, only one surface thereof may be surface-treated with the pretreatment agent according to the present embodiment, or both surfaces may be surface-treated with the pretreatment agent. In addition, when both surfaces are treated, both surfaces may be surface-treated with a single pretreatment agent, or each surface may be surface-treated with a different pretreatment agent having a different composition.

The degreasing treatment is not limited, and for example, a known method such as alkali degreasing cleaning may be employed. The degreasing treatment is usually carried out by a spray technique. After the degreasing treatment, a water washing treatment is performed to remove the degreasing agent remaining on the surface of the substrate, and then water on the surface of the substrate is removed using a technique such as draining with a roll, air blowing, or hot air drying.

The coating formed on at least one surface of the metal material preferably contains 0.8 to 3200 $mg/m^2$ of the water-soluble metal compound in terms of metal atoms on a dry mass basis of the coating for each of the at least one surface. The mass of the water-soluble metal compound in terms of metal atoms on a dry mass basis of the coating for each of the at least one surface of 0.8 $mg/m^2$ or more leads to an advantageous effect that sufficient adhesiveness between the coating and the laminating film can be favorably ensured. In addition, the mass of the water-soluble metal compound in terms of metal atoms on a dry mass basis of the coating for each of the at least one surface of 3200 $mg/m^2$ or less leads to an advantageous effect that sufficient adhesiveness between the coating and the metal material to be treated can be favorably ensured. Similarly, the water-soluble or water-dispersible acrylic resin is preferably contained in an amount of 1.0 to 4000 $mg/m^2$ in terms of solid content on a dry mass basis of the coating for each of the at least one surface. The mass of the water-soluble or water-dispersible acrylic resin in terms of solid content on a dry mass basis of the coating for each of the at least one surface of 1.0 mg/m² or more leads to an advantageous effect that sufficient adhesiveness between the coating and the laminating film can be favorably ensured. In addition, the mass of the acrylic resin in terms of solid content on a dry mass basis of the coating for each of the at least one surface of 4000 mg/m² or less leads to an advantageous effect that sufficient adhesiveness between the coating and the metal material to be treated can be favorably ensured. The coating needs to be formed on at least one surface of the metal material, and for example, the coating may be formed on both surfaces of the thin plate material.

In this embodiment, the surface free energy of a dry coating produced by applying the pretreatment agent to an aluminum substrate and drying the pretreatment agent, and having a coating mass of 50 to 100 mg/m² is preferably in the range of 52 to 74 mJ/m². The surface free energy of the dry coating within the above-specified range leads to an advantageous effect that the water resistance and the like of the coating formed from the pretreatment agent can be designed to fall within a more favorable range. The surface free energy is more preferably in the range of 52 to 68 mJ/m².

In the specification, the surface free energy of a dry film can be measured according to Owens-Wendt's theoretical equation for calculating the surface free energy of a substance. Specifically, the contact angle of a sample material is measured using a liquid having a known surface free energy value (water, methylene iodide), and the surface free energy of the sample material can be calculated using the theoretical equation in D. K. Owens and R. C. Wendt, J. Appl. Polym. Sci., 13, 1741 (1969). For example, 2 pl of pure water and 2 pl of diiodomethane are dropped onto the surface of the coating layer of the glass test piece, the contact angle ($\theta$) is measured with a contact angle meter, and the surface free energy value $\gamma s$ can be calculated according to the following Owens equation:

$$1 + \cos\theta = 2[(\gamma s^d \gamma l^d)^{1/2}/\gamma l + (\gamma s^p \gamma l^p)^{1/2}/\gamma l]$$

wherein $\gamma s$ represents the surface free energy of the solid, $\gamma l$ represents the surface free energy of the liquid, the superscript d represents the dispersion force component, and the superscript p represents the polar force component.

The application method of the pretreatment agent according to the present embodiment is not limited as long as the mass of each component of the coating to be formed falls within the above-specified range. Examples of the application method include roll coater coating, gravure coater coating, reverse coater coating, slot die coater coating, lip coater coating, knife coater coating, blade coater coating, chamber doctor coater coating, air knife coater coating, curtain coat coating, spin coat coating, brush coating, roller coating, bar coater coating, dip coating, applicator coating, spray coating, flow coating, and the like, and combinations thereof.

The heating and drying method of the pretreatment agent according to the present embodiment is not limited, and examples thereof include oven drying, a method involving forced circulation of hot air, and a method involving drying in an electromagnetic induction heating furnace using an IH heater, or the like. The heating and drying conditions may be, for example, 40 to 160°C for 2 to 60 seconds. The air volume, air velocity, and the like selected in the drying method can be set as desired.

The method of attaching the laminating film to the metal material having the coating formed from the pretreatment agent on the surface thereof is not limited, and a known method such as a dry lamination method, a heat lamination method, or an extrusion lamination method may be used. The laminating film is not limited, and a known laminating film may be used. Examples of the laminating film include polypropylene resins, polyethylene terephthalate resins, nylon resins, polyethylene naphthalate resins, polyester resins, polycarbonate resins, polyvinyl alcohol resins, polyvinyl acetal resins, polyvinylidene chloride resins, polyvinyl acetate resins, polyethylene isophthalate resins, copolymerized polyester resins, polyester resins, polyamide resins, polyimide resins, polyetherimide resins, polyphenylene sulfide resins, fluorocarbon resins, silicone resins, nylon resins, phenol resins, (meth)acrylic resins, epoxy resins, polymetaxylylene adipamide, etc., and resins obtained by mixing two or more types of resins including the above-listed resins. The laminating film made of these materials may be uniaxially or biaxially stretched.

The laminated metal material according to the present embodiment may have a layer other than the coating formed from the pretreatment agent and the laminating film. For example, an adhesive layer may be provided between the coating formed from the pretreatment agent and the laminating film. The adhesive layer is not limited, and may be formed of a one-component adhesive or a two-component adhesive. The resin component of the adhesive that may be used for forming the adhesive layer is not limited, and examples thereof include polyolefin resins, polyester resins, polyether resins, polyurethane resins, polycarbonate resins, epoxy resins, phenol resins, polyamide resins, polyvinyl acetate resins, cellulose resins, (meth)acrylic resins, polyimide resins, amino resins, chloroprene rubber, nitrile rubber, styrenebutadiene rubber, silicone resins, fluorinated ethylene propylene copolymer, etc. These resin components may be used alone or in combination of two or more types thereof. Examples of the combination of two or more resin components include a polyurethane resin and a modified polyolefin resin, a polyamide resin and an acid-modified polyolefin resin, a polyamide resin and a metal-modified polyolefin resin, a polyamide resin and a polyester resin, a polyester resin and an acid-modified polyolefin resin, a polyester resin and a metal-modified polyolefin resin, etc.

The method of forming the adhesive layer is not limited, and examples thereof include an extrusion molding method, a dispersion method, etc.

Since the pretreatment agent according to the present embodiment contains specific amounts of the water-soluble metal compound and the acrylic resin, the pretreatment agent exhibits excellent coating workability and stability, and the resultant laminated metal material has sufficient adhesiveness. A pretreatment agent simply containing an acrylic resin and a zirconium compound has corrosion resistance, whereas the pretreatment agent according to the present embodiment has an advantageous effect that the adhesiveness to a laminating film is improved and corrosion resistance is also achieved. Therefore, the pretreatment agent according to the present embodiment is particularly preferably used in the production of a laminated metal material which is required to have the adhesiveness and corrosion resistance after advanced processing.

The pretreatment agent according to the present embodiment also has an advantageous effect that a laminated metal material having favorable water resistance, acid resistance, and alkali resistance can be produced because of the configuration specified above. Furthermore, the pretreatment agent according to the present embodiment also has an advantageous effect that the pretreatment agent exhibits favorable dispersibility during the production of the treatment agent and excellent production stability.

EXAMPLES

Hereinafter, the present invention will be described in more detail with reference to Examples. The present invention is not limited to the following Examples. In the Examples, "parts" and "%" are on a mass basis unless otherwise indicated.

(Acrylic Resin Synthesis Example 1)

Into a flask equipped with a heating/stirring device was charged 95.13 parts by mass of deionized water, and heated to 80°C with stirring and refluxing under nitrogen. Then, with heating, stirring, and refluxing under nitrogen, a monomer mixture solution of the monomers shown in Table 1, and a mixture solution of ACVA (4,4'-azobis(4-cyanovaleric acid)) as a polymerization initiator and a 25% aqueous ammonia solution were added dropwise using dropping funnels over 3 hours. After completion of the dropwise addition, heating, stirring, and refluxing under nitrogen were continued for 2 hours. Thereafter, the heating and refluxing under nitrogen was stopped, and the solution was cooled to 30°C with stirring, neutralized to pH 9 with 25% aqueous ammonia solution, and filtered through 200 mesh to obtain a clear and colorless water-soluble acrylic resin. The acrylic resin had a solid acid value of 603 mg KOH/g, a solid hydroxyl value of 84 mg KOH/g, and a glass transition temperature of 94°C, as shown in Table 1. In addition, the number average molecular weight, as measured by GPC, was 100,000. It should be noted that in Table 1, the units for numerical values where the unit is not specified are parts by mass. In addition, the amount of 25% aqueous ammonia solution used in the neutralization is not included in the amount of aqueous ammonia in Table 1, and refers to the amount of the aqueous ammonia solution separately used as a neutralizing agent.

(Acrylic Resin Synthesis Examples 2 to 20)

Acrylic resins of Synthesis Examples 2 to 20 were obtained in the same manner as in Synthesis Example 1 except that the amounts of the raw materials used were as shown in Table 1. The number average molecular weight, the solid acid value, the solid hydroxyl value, and the glass transition temperature are shown in Table 1.

Incidentally, the abbreviation described in Table 1 is as follows. APS: polymerization initiator, ammonium persulfate

[Table 1]

| No. | Deio-nized water | Monomer (A) | | | | | | | | | AC-VA | A-PS | Aqu-eous am-monia | Mole-cular weight (MN) | Solid acid value (mgK-OH/g) | Solid hydro-xyl value (mgK-OH/g) | Glass transi-tion tem-pera-ture Tg (°C) | Function-al mono-mer/OH group |
|---|---|---|---|---|---|---|---|---|---|---|---|---|---|---|---|---|---|---|
| | | Ac-rylic acid | Me-thacryl-ic acid | Ethyl acry-late | Acrylo-nitrile | 2-Hydroxye-thyl methacry-late | 2-Hydroxye-thyl acrylate | Glycidyl metha-crylate | Acryla-mide | Hydro-xyethyl acryla-mide | | | | | | | | |
| Synth-esis Exam-ple 1 | 95.13 | 3.00 | 0.87 | - | - | 0.94 | - | - | - | - | 0.0-4 | | 0.20 | 100,0-00 | 603 | 84 | 94 | - |
| Synth-esis Exam-ple 2 | 94.98 | 3.87 | 0.10 | - | - | 0.94 | - | - | 0.05 | - | 0.0-4 | - | 0.20 | 100,0-00 | 621 | 82 | 83 | 0.10 |
| Synth-esis Exam-ple 3 | 94.98 | 3.88 | 0.10 | - | - | 0.94 | - | - | 0.05 | - | 0.0-3 | - | 0.15 | 200,0-00 | 621 | 82 | 83 | 0.10 |
| Synth-esis Exam-ple 4 | 95.00 | 3.88 | 0.10 | - | - | 0.94 | - | - | 0.05 | - | 0.0-2 | - | 0.10 | 500,0-00 | 621 | 82 | 83 | 0.10 |
| Synth-esis Exam-ple 5 | 95.14 | 3.86 | - | - | - | 0.94 | - | - | - | - | 0.0-4 | - | 0.20 | 100,0-00 | 626 | 84 | 80 | - |
| Synth-esis Exam-ple 6 | 95.16 | 3.86 | - | - | - | 0.94 | - | - | - | - | - | 0.-03 | - | 90,00-0 | 626 | 84 | 80 | - |
| Synth-esis Exam-ple 7 | 94.98 | 3.77 | 0.20 | 0.05 | - | - | 0.99 | - | - | 0.05 | 0.0-4 | - | 0.20 | 100,0-00 | 612 | 96 | 64 | 0.05 |

(continued)

| No. | Monomer (A) | | | | | | | | | | AC-VA | A-PS | Aqueous ammonia | Molecular weight (MN) | Solid acid value (mgKOH/g) | Solid hydroxyl value (mgKOH/g) | Glass transition temperature Tg (°C) | Functional monomer/OH group |
|---|---|---|---|---|---|---|---|---|---|---|---|---|---|---|---|---|---|---|
| | Deionized water | Acrylic acid | Methacrylic acid | Ethyl acrylate | Acrylonitrile | 2-Hydroxyethyl methacrylate | 2-Hydroxyethyl acrylate | Glycidyl methacrylate | Acrylamide | Hydroxyethyl acrylamide | | | | | | | | |
| Synthesis Example 8 | 95.13 | 3.87 | 0.10 | | 0.05 | 0.94 | - | - | - | - | 0.04 | - | 0.20 | 100,000 | 621 | 82 | 82 | 0.13 |
| Synthesis Example 9 | 94.99 | 3.87 | 0.10 | - | - | 0.94 | - | 0.05 | - | - | 0.04 | - | 0.20 | 100,000 | 621 | 82 | 81 | 0.05 |
| Synthesis Example 10 | 95.13 | 2.48 | - | - | - | 2.33 | - | - | - | - | 0.04 | - | 0.20 | 100,000 | 401 | 209 | 71 | - |
| Synthesis Example 11 | 95.14 | 2.48 | - | - | - | 2.33 | - | - | - | - | 0.03 | - | 0.20 | 200,000 | 401 | 209 | 71 | - |
| Synthesis Example 12 | 95.06 | 0.70 | 0.30 | 0.05 | - | 3.88 | - | - | - | - | 0.05 | - | 0.25 | 70,000 | 150 | 339 | 64 | - |
| Synthesis Example 13 | 95.15 | 0.75 | 0.25 | 0.05 | - | 3.86 | - | - | - | - | 0.04 | - | 0.20 | 80,000 | 152 | 339 | 63 | - |
| Synthesis Example 14 | 94.93 | 4.50 | - | - | - | 0.50 | - | - | - | - | 0.05 | - | 0.25 | 80,000 | 701 | 43 | 84 | - |

| No. | Deio-nized water | Monomer (A) | | | | | | | | | AC-VA | A-PS | Aqu-eous am-monia | Mole-cular weight (MN) | Solid acid value (mgK-OH/g) | Solid hydro-xyl value (mgK-OH/g) | Glass transi-tion tem-pera-ture Tg (°C) | Function-al mono-mer/OH group |
|---|---|---|---|---|---|---|---|---|---|---|---|---|---|---|---|---|---|---|
| | | Ac-rylic acid | Me-thacryl-ic acid | Ethyl acry-late | Acrylo-nitrile | 2-Hydroxye-thyl methacry-late | 2-Hydroxye-thyl acrylate | Glycidyl metha-crylate | Acryla-mide | Hydro-xyethyl acryla-mide | | | | | | | | |
| Synthesis Example 15 | 94.98 | 2.48 | - | 0.05 | - | 2.33 | - | - | - | - | - | 0.-20 | - | 9,000 | 397 | 207 | 69 | - |
| Synthesis Example 16 | 94.98 | 2.48 | - | 0.05 | - | 2.33 | - | - | - | - | 0.0-6 | - | 0.30 | 50,00-0 | 397 | 207 | 69 | - |
| Synthesis Example 17 | 94.08 | 0.20 | 0.55 | 0.05 | - | 5.60 | - | - | - | - | 0.0-5 | - | 0.25 | 70,00-0 | 80 | 377 | 63 | - |
| Synthesis Example 18 | 94.93 | 4.76 | - | - | - | 0.29 | - | - | - | - | 0.0-5 | - | 0.20 | 80,00-0 | 741 | 21 | 85 | - |
| Synthesis Example 19 | 94.61 | 3.21 | - | 0.53 | - | 1.60 | - | - | - | - | - | 0.-04 | - | 58000 | 968 | 129 | 62 | - |
| Synthesis Example 20 | 95.13 | 3.80 | - | | | - | 1.00 | | | | 0.0-4 | | 0.20 | 100,0-00 | 616 | 101 | 60 | - |

12

EP 4 491 762 A1

(Preparation of Pretreatment Agent)

(Example 1)

Deionized water was charged into a flask equipped with a heating/stirring device, and the aqueous acrylic resin solution obtained in Synthesis Example 1 was gradually added at room temperature with stirring, so as to achieve 7,500 ppm by mass in terms of solid content, and a water-soluble zirconium compound (zirconium ammonium carbonate, from Daiichi Kigenso Kagaku Kogyo Co., Ltd., trade name: Zircozole AC-7, containing 13% in terms of Zr atoms) was gradually added with stirring, so as to achieve 2,500 ppm by mass in terms of zirconium metal atoms, and the stirring was continued for 20 minutes to prepare a pretreatment agent of Example 1.

(Examples 2 to 29, Comparative Examples 1 to 11)

Pretreatment agents of Examples 2 to 29 and Comparative Examples 1 to 11 were prepared in the same manner as in Example 1 except that the types and concentrations of the acrylic resin and the water-soluble metal compound were as shown in Table 2. In Examples 15 and 16 and Comparative Example 3, a melamine resin ("CYMEL 370N" (nonvolatile content: 80%) from Nihon Cytec Industries Inc.) or a phenol resin ("SHONOL BRL-204" (nonvolatile content 70%) from Aica Kogyo Company, Limited) was used as a crosslinking agent in the amounts shown in Table 2. In Example 17, a polyester resin

("VYLONAL MD1245" (500 ppm by mass) from Toyobo Co., Ltd.) was used as other resin. In Example 26, tetraalkylammonium-modified zirconium ("ORGATIX ZC700" (nonvolatile content 20%), from Matsumoto Fine Chemical Co., Ltd.) was used as the water-soluble zirconium compound. In Examples 27 and 28, ammonium hexaflorozirconate and titanium triethanolaminate were used, respectively. In Example 29, zirconium ammonium carbonate (2250 ppm by mass in terms of Zr) and titanium triethanolaminate (250 ppm by mass in terms of Ti) were used in combination as the water-soluble metal compound. In Comparative Example 1, "JURYMER AC-10L" from Toagosei Chemical Industry Co. was used as the polyacrylic acid.

[Table 2]

| | | Pretreatment agent | | | | | | | | Crosslinking agent/other resin | | |
| | | Metal compound (A) | | Acrylic resin (B) | | | | | | | | |
| | | Type | (in terms of metal atoms, ppm by mass) | Synthesis Example | Solid acid value (mgKOH/g) | Solid hydroxyl value (mgKOH/g) | Molecular weight | Tg | Concentration (in terms of solid content, ppm by mass) | Type | Amount (ppm by mass) | (A)/(B) |
|---|---|---|---|---|---|---|---|---|---|---|---|---|
| Examples | 1 | Zirconium ammonium carbonate | 2,500 | Synthesis Example 1 | 603 | 84 | 100,000 | 94 | 7,500 | – | – | 25/75 |
| | 2 | Zirconium ammonium carbonate | 2,500 | Synthesis Example 2 | 621 | 82 | 100,000 | 83 | 7,500 | – | – | 25/75 |
| | 3 | Zirconium ammonium carbonate | 2,500 | Synthesis Example 3 | 621 | 82 | 200,000 | 83 | 7,500 | – | – | 25/75 |
| | 4 | Zirconium ammonium carbonate | 2,500 | Synthesis Example 4 | 621 | 82 | 500,000 | 83 | 7,500 | – | – | 25/75 |
| | 5 | Zirconium ammonium carbonate | 500 | Synthesis Example 5 | 626 | 84 | 100,000 | 81 | 500 | – | – | 50/50 |
| | 6 | Zirconium ammonium carbonate | 60,000 | Synthesis Example 5 | 626 | 84 | 100,000 | 81 | 60,000 | – | – | 50/50 |
| | 7 | Zirconium ammonium carbonate | 2,500 | Synthesis Example 5 | 626 | 84 | 100,000 | 81 | 7,500 | – | – | 25/75 |
| | 8 | Zirconium ammonium carbonate | 2,500 | Synthesis Example 6 | 626 | 84 | 90,000 | 81 | 7,500 | – | – | 25/75 |
| | 9 | Zirconium ammonium carbonate | 500 | Synthesis Example 5 | 626 | 82 | 100,000 | 81 | 13,500 | – | – | 4/96 |
| | 10 | Zirconium ammonium carbonate | 13,600 | Synthesis Example 5 | 626 | 84 | 100,000 | 81 | 1,400 | – | – | 91/9 |
| | 11 | Zirconium ammonium carbonate | 2,500 | Synthesis Example 5 | 626 | 84 | 100,000 | 81 | 7,500 | – | – | 25/75 |
| | 12 | Zirconium ammonium carbonate | 2,500 | Synthesis Example 5 | 626 | 84 | 100,000 | 81 | 7,500 | – | – | 25/75 |
| | 13 | Zirconium ammonium carbonate | 2,500 | Synthesis Example 5 | 626 | 84 | 100,000 | 81 | 7,500 | – | – | 25/75 |
| | 14 | Zirconium ammonium carbonate | 2,500 | Synthesis Example 5 | 626 | 84 | 100,000 | 81 | 7,500 | – | – | 25/75 |
| | 15 | Zirconium ammonium carbonate | 2,500 | Synthesis Example 5 | 626 | 84 | 100,000 | 81 | 7,500 | Melamine | 500 | 25/75 |
| | 16 | Zirconium ammonium carbonate | 2,500 | Synthesis Example 5 | 626 | 84 | 100,000 | 81 | 7,500 | Phenol | 500 | 25/75 |
| | 17 | Zirconium ammonium carbonate | 2,500 | Synthesis Example 5 | 626 | 84 | 100,000 | 81 | 7,000 | Polyester resin | 500 | 26/74 |
| | 18 | Zirconium ammonium carbonate | 2,500 | Synthesis Example 7 | 612 | 96 | 100,000 | 64 | 7,500 | – | – | 25/75 |
| | 19 | Zirconium ammonium carbonate | 2,500 | Synthesis Example 8 | 621 | 82 | 100,000 | 82 | 7,500 | – | – | 25/75 |
| | 20 | Zirconium ammonium carbonate | 2,500 | Synthesis Example 9 | 621 | 82 | 100,000 | 82 | 7,500 | – | – | 25/75 |
| | 21 | Zirconium ammonium carbonate | 2,500 | Synthesis Example 10 | 401 | 209 | 100,000 | 71 | 7,500 | – | – | 25/75 |
| | 22 | Zirconium ammonium carbonate | 2,500 | Synthesis Example 11 | 401 | 209 | 200,000 | 71 | 7,500 | – | – | 25/75 |
| | 23 | Zirconium ammonium carbonate | 2,500 | Synthesis Example 12 | 158 | 339 | 70,000 | 64 | 7,500 | – | – | 25/75 |
| | 24 | Zirconium ammonium carbonate | 2,500 | Synthesis Example 13 | 159 | 339 | 80,000 | 63 | 7,500 | – | – | 25/75 |
| | 25 | Zirconium ammonium carbonate | 2,500 | Synthesis Example 14 | 701 | 43 | 80,000 | 84 | 7,500 | – | – | 25/75 |
| | 26 | Tetraalkylammonium-modified zirconium | 2,500 | Synthesis Example 2 | 621 | 82 | 100,000 | 83 | 7,500 | – | – | 25/75 |
| | 27 | Ammonium hexaflorozirconate | 2,500 | Synthesis Example 2 | 621 | 82 | 100,000 | 83 | 7,500 | – | – | 25/75 |
| | 28 | Titanium triethanolaminate | 2,500 | Synthesis Example 5 | 626 | 84 | 100,000 | 81 | 7,500 | – | – | 25/75 |
| | 29 | Zirconium ammonium carbonate/titanium triethanolaminate | 2,250/250 | Synthesis Example 5 | 626 | 84 | 100,000 | 81 | 7,500 | – | – | 25/75 |
| Comparative Examples | 1 | Zirconium ammonium carbonate | 2,500 | Polyacrylic acid | 760 | 0 | 25,000 | | 7,500 | – | – | 25/75 |
| | 2 | Zirconium ammonium carbonate | 2,500 | Synthesis Example 15 | 397 | 207 | 9,000 | 69 | 7,500 | – | – | 25/75 |
| | 3 | Zirconium ammonium carbonate | 2,500 | Synthesis Example 15 | 397 | 207 | 9,000 | 69 | 7,500 | Melamine | 500 | 25/75 |
| | 4 | Zirconium ammonium carbonate | 7,500 | – | – | – | – | | – | – | – | – |
| | 5 | Zirconium ammonium carbonate | 100 | Synthesis Example 2 | 621 | 82 | 100,000 | | 100 | – | – | 50/50 |
| | 6 | – | – | Synthesis Example 2 | 621 | 82 | 100,000 | | 7,500 | – | – | – |
| | 7 | Zirconium ammonium carbonate | 2,500 | Synthesis Example 16 | 397 | 207 | 50,000 | 69 | 7,500 | – | – | 25/75 |
| | 8 | Zirconium ammonium carbonate | 2,500 | Synthesis Example 17 | 80 | 377 | 70,000 | 63 | 7,500 | – | – | 25/75 |
| | 9 | Zirconium ammonium carbonate | 2,500 | Synthesis Example 18 | 741 | 21 | 80,000 | 86 | 7,500 | – | – | 25/75 |
| | 10 | Zirconium ammonium carbonate | 2,500 | Synthesis Example 19 | 468 | 129 | 58,000 | 62 | 7,500 | – | – | 25/75 |
| | 11 | Zirconium ammonium carbonate | 2,500 | Synthesis Example 20 | 616 | 101 | 100,000 | 60 | 7,500 | – | – | 25/75 |

[Measurement of Surface Free Energy of Dry Coating of Pretreatment Agent]

Dry coatings were formed using the pretreatment agents obtained in Examples and Comparative Examples, and the surface free energies were measured. The aluminum alloy 3004 plate material (Al) was degreased (treated at 65°C for 3 seconds) using a 2% dilution of "SURFCLEANER 330" from Nippon Paint Surf Chemicals Co., Ltd., and each of the obtained pretreatment agents was applied to the resultant aluminum material using a bar coater, and dried in a hot air oven at a material temperature of 100°C or higher to obtain a metal material with a dry coating having a coating mass of 70 mg/m$^2$ formed thereon.

The contact angle between the obtained dry coating and deionized water (DIW) and the contact angle between the dry coating and methylene iodide were measured at 20°C or higher and 23°C or lower 30 seconds after dropping the droplets, using an automated contact angle meter (PD-X type, from Kyowa Interface Science Co., LTD.). The surface free energy of the dry coating was calculated from the obtained measurements based on the equation mentioned above. The values of the surface free energy of the dry coating on the aluminum material are shown in Table 3 below.

<<Coating of Pretreatment Agent>>

An aluminum alloy 3004 plate material (Al) as a metal material was degreased (treated at 65°C for 3 seconds) using a 2% dilution of "SURFCLEANER 330" from Nippon Paint Surf Chemicals Co., Ltd., and each of the pretreatment agents of Examples and Comparative Examples described above were applied to the resultant aluminum material using a bar coater, and dried in a hot air oven at a material temperature of 100°C or higher to obtain a metal material having a coating formed from the pretreatment agent on the surface. The solid content mass of the acrylic resin and the mass of the water-soluble metal compound in terms of metal atoms on a dry mass basis of the coating (mg/m$^2$) are shown in Table 3. Copper (NC-WS from Furukawa Electric Co., Ltd.), SUS (SUS 304), a Ni-plated steel sheet based on SPCC as a base steel sheet, and an aluminum die casting (ADC-12) were used as the metal material in Examples 11, 12, 13, and 14, respectively.

[Table 3]

| | Mass on dry mass basis of coating | | Metal material | Surface tension |
|---|---|---|---|---|
| | Acrylic resin | Metal compound (in terms of metal atoms) | | |
| | $(mg/m^2)$ | $(mg/m^2)$ | | $(mJ/m^2)$ |
| Examples 1 | 54 | 18 | Al | 55.2 |
| 2 | 54 | 18 | Al | 65.2 |
| 3 | 54 | 18 | Al | 65.9 |
| 4 | 54 | 18 | Al | 66.0 |
| 5 | 3 | 3 | Al | 61.7 |
| 6 | 360 | 360 | Al | 61.0 |
| 7 | 54 | 18 | Al | 66.8 |
| 8 | 54 | 18 | Al | 64.0 |
| 9 | 120 | 5 | Al | 74.0 |
| 10 | 10 | 100 | Al | 52.3 |
| 11 | 54 | 18 | Cu | – |
| 12 | 51 | 17 | SUS | – |
| 13 | 51 | 17 | Ni-plated steel sheet | – |
| 14 | 51 | 17 | ADC | – |
| 15 | 54 | 18 | Al | 62.8 |
| 16 | 54 | 18 | Al | 63.6 |
| 17 | 51 | 18 | Al | 63.0 |
| 18 | 51 | 17 | Al | 65.9 |
| 19 | 54 | 18 | Al | 73.2 |
| 20 | 54 | 18 | Al | 66.6 |
| 21 | 54 | 18 | Al | 65.2 |
| 22 | 54 | 18 | Al | 64.8 |
| 23 | 54 | 18 | Al | 62.0 |
| 24 | 54 | 18 | Al | 63.1 |
| 25 | 54 | 18 | Al | 68.2 |
| 26 | 45 | 15 | Al | 62.3 |
| 27 | 60 | 20 | Al | 67.3 |
| 28 | 54 | 18 | Al | 65.0 |
| 29 | 60 | 20 | Al | 64.3 |
| Comparative Examples 1 | 54 | 18 | Al | 77.6 |
| 2 | 54 | 18 | Al | 66.5 |
| 3 | 54 | 18 | Al | 64.9 |
| 4 | 0 | 60 | Al | 50.6 |
| 5 | 0.6 | 0.6 | Al | 75.5 |
| 6 | 60 | 0 | Al | 77.1 |
| 7 | 54 | 18 | Al | 64.5 |
| 8 | 54 | 18 | Al | 50.3 |
| 9 | 54 | 18 | Al | 78.0 |
| 10 | 54 | 18 | Al | 65.8 |
| 11 | 54 | 18 | Al | 68.2 |

<<Production of Laminated Metal Material>>

Metal materials having a coating formed on the surface thereof by applying each of the pretreatment agents according to Examples and Comparative Examples described above were subjected to the following method for producing a laminated metal material, to produce laminated metal materials. A polyester-based two-component adhesive was used as an adhesive, and coated on the coating formed on the surface of the metal material so as to achieve 3 g/m$^2$ after drying. Next, a PP film was pressure-bonded to the coated surface at 100°C and 0.2 MPa, and then the metal material was stored at 40°C for 4 days to obtain a laminated metal material.

[Initial Adhesiveness Test]

The laminated metal materials according to Examples and Comparative Examples produced according to the procedure described above were cut into a piece with a size of 150 mm × 15 mm. The peel strength (N/15 mm width) applied when the film on the test piece was peeled off was measured using a "TENSILON tensile tester" (LST-200N-S, from Minerva). The measurement result was referred to as the initial adhesiveness, and evaluated according to the following evaluation criteria, and a score of 4 or higher was considered to be acceptable. The results are shown in Table 4.

(Evaluation Criteria)

5: 8.0 N/15 mm width or more
4: 6.0 N/15 mm width or more and less than 8.0 N/15 mm width
3: 4.0 N/15 mm width or more and less than 6.0 N/15 mm width
2: 2.0 N/15 mm width or more and less than 4.0 N/15 mm width
1: less than 2.0 N/15 mm width

[Adhesiveness Test after Retort Treatment]

A test piece obtained by cutting the pressure-bonded metal plate into a piece with a size of 150 mm × 15 mm was placed in an autoclave, and heat-treated in pressurized steam at 125°C for 45 minutes (retorting treatment). Using the retorted test piece, the peel strength (N/15 mm width) applied when the film on the test piece was peeled off was measured using a "TENSILON tensile tester" (LST-200N-S, from Minerva). The measurement result was referred to as the adhesiveness after the retort treatment, and evaluated according to the same evaluation criteria as those of the initial adhesiveness, and a score of 4 or higher was considered to be acceptable. The results are shown in Table 4.

[Water Resistance Test]

The test plate prepared in <<Coating of Pretreatment Agent>> above was immersed in running tap water (flowing water amount: 15 kg/hr) for 24 hours. Thereafter, the test plate was pulled up and dried, and then the proportion of the residual coating was visually evaluated. The evaluation criteria are as follows. The results of the evaluation are shown in Table 4.

(Evaluation Criteria)

3: proportion of residual coating of 80% or more
2: proportion of residual coating of 50% or more and less than 85%
1: proportion of residual coating of less than 50%

[Acid Resistance Test]

The laminated metal material produced according to the procedure described in <<Production of Laminated Metal Material>> above was cut into a piece with a size of 150 mm × 15 mm. The obtained test piece was immersed in an aqueous acetic acid solution (pH 2) at 23°C for 7 days. The test piece taken out from the immersion was washed with water and dried, and then the peel strength (N/15 mm width) applied when the film on the test piece was peeled off was measured using a "TENSILON tensile tester" (LST-200N-S, from Minerva). The measurement result was evaluated according to the following evaluation criteria. The results are shown in Table 4.

(Evaluation Criteria)

3: 6.0 N/15 mm width or more
2: 3.0 N/15 mm width or more and less than 6.0 N/15 mm width
1: less than 3.0 N/15 mm width

[Alkali Resistance Test]

The laminated metal material produced according to the procedure described in <<Production of Laminated Metal Material>> above was cut into a piece with a size of 150 mm × 15 mm. The obtained test piece was immersed in an aqueous 2% sodium hydroxide solution at 40°C for 7 days. The test piece taken out from the immersion was washed with water and dried, and then the peel strength (N/15 mm width) applied when the film on the test piece was peeled off was measured using a "TENSILON tensile tester" (LST-200N-S, from Minerva). The measurement result was evaluated according to the following evaluation criteria. The results are shown in Table 4.

(Evaluation Criteria)

3: 6.0 N/15 mm width or more
2: 3.0 N/15 mm width or more and less than 6.0 N/15 mm width
1: less than 3.0 N/15 mm width

It should be noted that in the production of the laminated metal material in the evaluation tests, the laminated metal material was produced using an adhesive, but the laminated metal material could also be favorably produced by pressure-bonding a PET film at 180°C and 0.2 MPa onto a coating formed by coating the surface of a metal material with the pretreatment agent. In addition, a laminated metal material can also be favorably produced by applying a polyester adhesive to a coating formed by coating the surface of a metal material with the pretreatment agent, pressure-bonding a PE film at 100°C and 0.2 MPa, and storing the metal material at 40°C for 4 days.

[Table 4]

| | | Adhesiveness evaluation (Laminated metal material) | | Water resistance | Acid resistance (Laminated metal material) | Alkali resistance (Laminated metal material) |
|---|---|---|---|---|---|---|
| | | Initial | After treatment | | | |
| Examples | 1 | 5 | 4 | 3 | 3 | 3 |
| | 2 | 5 | 5 | 3 | 3 | 3 |
| | 3 | 5 | 5 | 3 | 3 | 3 |
| | 4 | 5 | 5 | 3 | 3 | 3 |
| | 5 | 5 | 4 | 3 | 2 | 2 |
| | 6 | 5 | 4 | 3 | 3 | 3 |
| | 7 | 5 | 5 | 3 | 3 | 3 |
| | 8 | 5 | 5 | 3 | 3 | 3 |
| | 9 | 5 | 4 | 2 | 2 | 2 |
| | 10 | 4 | 4 | 2 | 2 | 2 |
| | 11 | 4 | 4 | 3 | 3 | 3 |
| | 12 | 4 | 4 | 3 | 3 | 3 |
| | 13 | 4 | 4 | 3 | 3 | 3 |
| | 14 | 4 | 4 | 3 | 3 | 3 |
| | 15 | 5 | 5 | 3 | 3 | 3 |
| | 16 | 5 | 5 | 3 | 3 | 3 |
| | 17 | 4 | 4 | 3 | 3 | 3 |
| | 18 | 5 | 4 | 3 | 3 | 3 |
| | 19 | 5 | 4 | 3 | 3 | 3 |
| | 20 | 5 | 4 | 3 | 3 | 3 |
| | 21 | 5 | 5 | 3 | 3 | 3 |
| | 22 | 5 | 5 | 3 | 3 | 3 |
| | 23 | 5 | 4 | 3 | 3 | 3 |
| | 24 | 5 | 4 | 3 | 3 | 3 |
| | 25 | 5 | 4 | 2 | 2 | 2 |
| | 26 | 5 | 4 | 3 | 3 | 3 |
| | 27 | 5 | 4 | 3 | 3 | 3 |
| | 28 | 5 | 4 | 3 | 3 | 3 |
| | 29 | 5 | 4 | 3 | 3 | 3 |
| Comparative Examples | 1 | 5 | 1 | 2 | 3 | 3 |
| | 2 | 3 | 1 | 1 | 1 | 1 |
| | 3 | 4 | 1 | 2 | 1 | 1 |
| | 4 | 2 | 1 | 1 | 1 | 1 |
| | 5 | 2 | 1 | 3 | 1 | 1 |
| | 6 | 4 | 1 | 1 | 1 | 1 |
| | 7 | 5 | 2 | 1 | 1 | 2 |
| | 8 | 4 | 1 | 2 | 3 | 2 |
| | 9 | 4 | 1 | 2 | 2 | 2 |
| | 10 | 5 | 3 | 1 | 2 | 2 |
| | 11 | 5 | 3 | 3 | 1 | 1 |

EP 4 491 762 A1

From the results shown above, it was confirmed that the laminated metal materials according to Examples exhibited favorable adhesiveness as compared with the laminated metal materials according to the Comparative Examples. In Examples, the results of the water resistance test, the acid resistance test, and the alkali resistance test were also favorable. Comparative Example 1 is an example in which polyacrylic acid was used, and the acid value and the hydroxyl value of the resin were outside the scope of the present invention. This example was confirmed to be inferior in adhesiveness after the retort treatment. Comparative Examples 2, 3, and 7 are examples in which the number average molecular weight of the acrylic resin is outside the scope of the present invention. These examples were confirmed to be inferior in adhesiveness after the retort treatment, and the like. Comparative Example 4 is an example in which the pretreatment agent does not contain an acrylic resin. This example was confirmed to be inferior in all of the initial adhesiveness, the adhesiveness after retort treatment, the water resistance, the acid resistance, and the alkali resistance. Comparative Example 5 is an example in which the content of the acrylic resin is outside the scope of the present invention. This example was confirmed to be inferior in initial adhesiveness, adhesiveness after retort treatment, acid resistance, and alkali resistance. Comparative Example 6 is an example that does not contain the metal compound. This example was confirmed to be inferior in adhesiveness after retort treatment, water resistance, acid resistance, and alkali resistance. Comparative Examples 8 and 9 are examples in which the acid value and/or the hydroxyl value of the acrylic resin are/is outside the scope of the present invention. These examples were each confirmed to be inferior in adhesiveness after retort treatment. Comparative Example 10 is an example in which the number average molecular weight of the acrylic resin is outside the scope of the present invention, and the glass transition temperature is outside the scope of the present invention. This example was confirmed to be inferior in water resistance. Comparative Example 11 is an example in which the glass transition temperature of the acrylic resin is outside the scope of the present invention. This example was confirmed to be inferior in acid resistance, alkali resistance, and the like.

## Claims

1.  A pretreatment agent, comprising: a water-soluble metal compound being at least one of a water-soluble zirconium compound or a water-soluble titanium compound; and a water-soluble or water-dispersible acrylic resin, wherein

    a concentration of the water-soluble metal compound is 500 to 200,000 ppm by mass in terms of metal atoms, the water-soluble or water-dispersible acrylic resin has a number average molecular weight of 70,000 to 500,000, a solid acid value of 150 to 740 mg KOH/g, a solid hydroxyl value of 40 to 350 mg KOH/g, and a glass transition temperature of 63 to 100°C,
    a concentration of the water-soluble or water-dispersible acrylic resin is 500 to 200,000 ppm by mass in terms of solid content,
    a ratio of the concentration of the water-soluble metal compound in terms of metal atoms to the concentration of the water-soluble or water-dispersible acrylic resin is 3/97 to 91/9, and
    the pretreatment agent is used in production of a laminated metal material.

2.  The pretreatment agent according to claim 1, wherein a dry coating formed by applying the pretreatment agent to an aluminum substrate and drying the pretreatment agent, and having a coating mass of 50 to 100 mg/m$^2$ has a surface free energy of 52 to 74 mJ/m$^2$.

3.  The pretreatment agent according to claim 1 or 2, wherein the water-soluble or water-dispersible acrylic resin is a copolymer of a monomer (A), and
    the monomer (A) comprises one or more monomers having a glycidyl group, an amide group, a silanol group, a phosphate group, a nitrile group, or an imide group.

4.  The pretreatment agent according to claim 3, wherein an equivalent ratio (i)/(ii) of a sum of chemical equivalents of one or more functional groups selected from the group consisting of the glycidyl group, the amide group, the silanol group, the phosphate group, the nitrile group, and the imide group included in the water-soluble or water-dispersible acrylic resin (i) to chemical equivalents of a hydroxyl group included in the water-soluble or water-dispersible acrylic resin (ii) is in a range of 0.03 to 0.20.

5.  A metal material having at least one surface treated with the pretreatment agent according to claim 1 or 2.

6.  The metal material according to claim 5, wherein the metal material comprises a coating formed thereon, and, on a dry mass basis of the coating for each of the at least one surface, the coating comprises 0.8 to 3200 mg/m$^2$ of the water-soluble metal compound in terms of metal atoms, and 1.0 to 4000 mg/m$^2$ of the water-soluble or water-dispersible acrylic resin in terms of solid content.

## INTERNATIONAL SEARCH REPORT

| | International application No. |
|---|---|
| | **PCT/JP2023/003712** |

**A. CLASSIFICATION OF SUBJECT MATTER**

*C23C 26/00*(2006.01)i; *B32B 15/08*(2006.01)i; *B32B 27/30*(2006.01)i; *C09D 5/00*(2006.01)i; *C09D 5/02*(2006.01)i; *C09D 7/61*(2018.01)i; *C09D 133/00*(2006.01)i

FI: C23C26/00 A; B32B15/08 N; B32B27/30 A; C09D5/00 D; C09D5/02; C09D133/00; C09D7/61

According to International Patent Classification (IPC) or to both national classification and IPC

**B. FIELDS SEARCHED**

Minimum documentation searched (classification system followed by classification symbols)

C23C26/00; B32B15/08; B32B27/30; C09D5/00; C09D5/02; C09D7/61; C09D133/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2012-212511 A (NISSHIN STEEL CO LTD) 01 November 2012 (2012-11-01) paragraphs [0074]-[0086] | 1-6 |
| A | JP 2002-265821 A (NIPPON PAINT CO LTD) 18 September 2002 (2002-09-18) paragraphs [0032]-[0044] | 1-6 |
| P, A | WO 2022/054667 A1 (NIPPON PAINT SURF CHEMICALS CO., LTD.) 17 March 2022 (2022-03-17) claims, paragraphs [0051]-[0064] | 1-6 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 March 2023** | **18 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

22

**INTERNATIONAL SEARCH REPORT**
Information on patent family members

International application No.

**PCT/JP2023/003712**

| Patent document cited in search report | | | Publication date (day/month/year) | Patent family member(s) | | Publication date (day/month/year) |
|---|---|---|---|---|---|---|
| JP | 2012-212511 | A | 01 November 2012 | (Family: none) | | |
| JP | 2002-265821 | A | 18 September 2002 | (Family: none) | | |
| WO | 2022/054667 | A1 | 17 March 2022 | TW 202210535 | A | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011187386 A

**Non-patent literature cited in the description**

- **T. G. FOX**. *Bull. Am. Phys. Soc*, 1956, vol. 1 (3), 123

- **D. K. OWENS** ; **R. C. WENDT**. *J. Appl. Polym. Sci.*, 1969, vol. 13, 1741